# EUROPEAN PATENT APPLICATION

(11) **EP 1 955 626 A1**
(43) Date of publication of application: **13.08.2008**
(21) Application number: 06256162.6
(22) Date of filing: 01.12.2006
(51) Int. Cl.: A47J 36/16, A47J 36/18

(54) **Cookware**

(30) Priority: 16.11.2006 HK 06003024
(71) Applicant: Best Direct (International) Limited, Harrow, Middlesex HA1 1BH (GB)
(72) Inventor: The designation of the inventor has not yet been filed
(74) Representative: Cummings, Sean Patrick

(57) **Abstract**

A cooking utensil (10) comprises: an open-topped container (12) having a rim (20); lids (30, 42) co-operable with the rim (20) to close the open top of the container (12); and inserts (52, 78, 98) to be positioned within and supported by the container (12), each insert (52, 78, 98) having a depressed central portion (54, 80, 100) depending from a peripheral flange (56, 82, 102). The rim (20) comprises: an inner shoulder (24) against which the peripheral flange (56, 82, 102) can seat to support the insert (52, 78, 98) within the container (12); and an outer shoulder (22). An inner lid (42) can seat against the inner shoulder (24) or against a peripheral flange (56, 82, 102) that is seated against the inner shoulder (24); and an outer lid (30) is arranged to seat against the outer shoulder (22) while surrounding and covering the inner lid (42).

## Description

This invention relates to an item of cookware, more particularly a pan, pot or other utensil suitable for cooking multiple foodstuffs simultaneously on a single heat source such as a gas ring or heating element of a stove or hob.

Multi-level tiered cookers are well known. They typically include a steamer positioned above or suspended within a pot, whereby steam rising from a foodstuff cooking in the pot also cooks a foodstuff lying in the steamer. This is more economical than using two or more different pans, each with an associated heat source.

In general, however, a heat source such as a stove has to be left on for the duration of the cooking time. Thus, if the cooking time for a particular meal is one hour, a user will have to tend to the stove for one hour. The user is therefore unable to do things outside the kitchen while cooking without leaving the stove unattended, which may be dangerous. Also, traditional cookers apply ongoing direct heat to a foodstuff being cooked, to the detriment of its quality and nutritional value.

More generally, traditional multi-level cookers are wasteful of energy to the detriment of running cost and cooking time: they do not efficiently and quickly get heat to where it is needed for cooking, and they do not efficiently retain that heat. They also fail to combine simple, adaptable construction with effective segregation whereby different types of foodstuff can be cooked simultaneously under different cooking regimes such as steaming and baking, without cross-contamination of flavours. In particular, known multi-level cookers rely upon steaming or boiling and cannot effectively bake foodstuffs.

US 5974953 discloses a cooking utensil comprising: an open-topped container, the container having a rim that extends around the container; at least one lid that is co-operable with the rim to close the open top of the container; and at least one food-supporting insert such as a steamer basket that may be positioned within and supported by the container, the insert having a depressed central portion depending from a peripheral flange. The invention is characterised with respect to US 5974953 in that the rim comprises: an inner shoulder portion against which the peripheral flange of the insert can seat to support the insert positioned within the container; and an outer shoulder portion against which the lid can seat to close the open top of the container.

For retention of steam and heat, the peripheral flange is preferably continuous around the periphery of the insert. The peripheral flange and the inner shoulder portion are suitably planar.

To retain heat by insulating the top of the utensil in use, it is advantageous to employ inner and outer lids. In this case: an inner lid is arranged to seat against the inner shoulder portion or against a peripheral flange of an insert that is seated against the inner shoulder portion; and an outer lid is arranged to seat against the outer shoulder portion while surrounding and covering the inner lid. Preferably, the inner lid has a transparent body enabling viewing of food cooking in the container or in the insert, without undue loss of steam or heat.

The inner lid and the insert may be dimensioned such that the inner lid can seat on the peripheral flange of the insert inboard of an outer edge of the peripheral flange. The inboard position of the inner lid helps to prevent steam escaping around the sides of the insert from entering the depressed central portion of the insert closed by the inner lid. Nevertheless, the outer lid is preferably outboard of the outer edge of the peripheral flange, where an upstanding bead surrounding the outer shoulder portion of the rim defines a ring within which the outer lid fits.

The rim is suitably stepped such that the inner and outer shoulder portions are on different levels with respect to the open top of the container. For example, the outer shoulder portion is preferably closer than the inner shoulder portion to the open top of the container, as this maximises clearance between the outer and inner lids. The shoulder portions are suitably joined by an upright portion of the rim that defines a ring within which the inner lid or the peripheral flange of an insert fits.

For flexibility, the utensil of the invention preferably comprises at least two food-supporting inserts each having a depressed central portion depending from a peripheral flange. The peripheral flanges of the inserts correspond such that the peripheral flange of each insert is capable of seating interchangeably against the inner shoulder portion of the rim. For example, the peripheral flanges of the inserts may be of substantially the same diameter. It is also possible for one flange to seat against another flange; in particular, the peripheral flange of a second insert is preferably capable of seating against the peripheral flange of a first insert already seated against the inner shoulder portion of the rim.

In another aspect, the invention extends to a cooking utensil comprising: an open-topped container, the container having a rim that extends around the container; and at least two food-supporting inserts that may be positioned within and supported by the container, each insert having a depressed central portion depending from a peripheral flange; wherein the rim comprises a shoulder portion against which the peripheral flange of either insert can seat to support that insert positioned within the container. This aspect of invention is characterised with respect to US 5974953 in that the peripheral flange of a second insert is capable of seating against the peripheral flange of a first insert already seated against the shoulder portion of the rim.

In both aspects, it is advantageous if the inserts differ from one another as this enhances the flexibility of the utensil in use. The inserts may differ in their dimensions, in their shape or in their purpose. For example, the depressed central portion of the first insert is preferably deeper than the depressed central portion of the second insert. This enables the inserts to be nested when used together, with the depressed central portion of the second insert being received in the depressed central portion of the first insert. Also, the first insert may be a steamer defined by a wall penetrated by openings to admit steam to food supported therein; the second insert may, in contrast, be a baking pan or tray defined by a substantially continuous wall that blocks access of steam to food supported therein.

The container is suitably a pot for retaining liquids and preferably has an insulating side wall to retain heat. For example, the side wall may comprise inner and outer walls with an insulating gap between.

The utensil of the invention is suitably arranged for use with an external heat source such as a gas ring or heating element of a stove or hob, and so the container preferably has a heat-conducting base. However, it is also possible for the utensil of the invention to have an integral, self-contained heat source such as an electric heating element arranged to heat the contents of the container.

In order that the invention may be more readily understood, reference will be made, by way of example, to the accompanying drawings in which:
Figure 1 is a side view of a multi-cooker in accordance with the invention;
Figure 2 is a perspective view of the multi-cooker of Figure 1;
Figure 3 is a sectional side view of a pot being part of the multi-cooker of Figures 1 and 2;
Figures 4(a) and 4(b) are a side view and a top plan view, respectively, of a steamer insert for use in the multi-cooker of Figures 1 and 2;
Figure 5 is a perspective view of a baking pan insert for use in the multi-cooker of Figures 1 and 2;
Figure 6 is a side view of a handle suitable for lifting the inserts of Figures 4(a), 4(b) 5 out of the pot of Figure 3;
Figure 7 is an exploded schematic side view of a multi-cooker in accordance with the invention, showing outer and inner lids, a baking pan insert, a steamer insert and a pot;
Figure 8 corresponds to Figure 7 but shows the baking pan insert and the steamer insert within the pot, which is closed by the outer and inner lids;
Figure 9 is a perspective view of a trivet for use in the baking pan insert of Figure 5; and
Figure 10 is a perspective view of a grater/slicer insert also suitable for use in the multi-cooker of Figures 1 and 2.

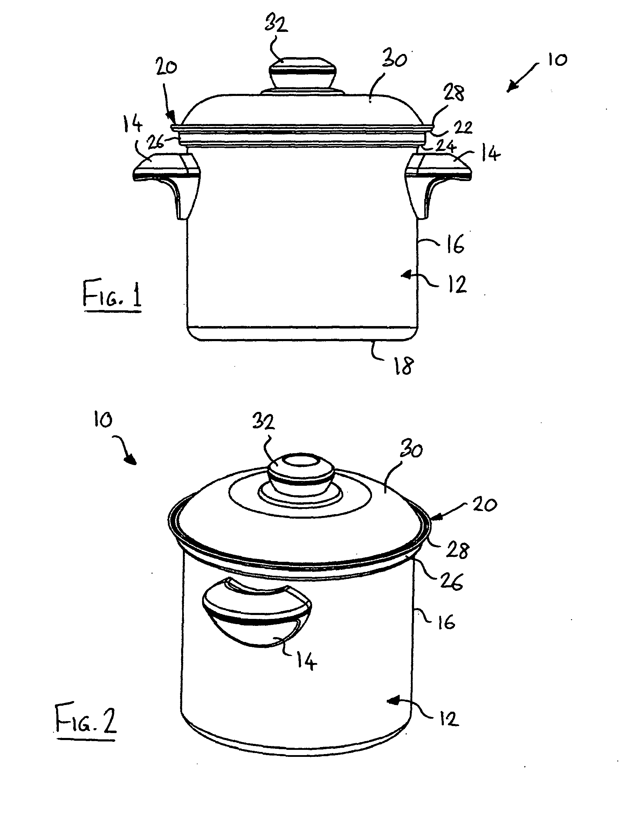

Figures 1 and 2 of the drawings show an item of cookware in the form of a multi-cooker 10. The multi-cooker 10 comprises a generally cylindrical open-topped pot 12 having opposed plastics handles 14 protruding outwardly from its continuous annular side wall 16. The side wall 16 is of circular horizontal section.

A flat base 18 closes the bottom of the pot 12 and is disposed orthogonally with respect to the side wall 16. Thus, the pot 12 is of parallel-sided U-shaped vertical section.

The open top of the pot 12 is surrounded by a stepped circular rim 20 extending outwardly from the top of the side wall 16. The rim 20 comprises an outer upper shoulder 22 and an inner lower shoulder 24 joined by an annular upright 26. The outer upper shoulder 22 is surrounded by an upstanding bead 28.

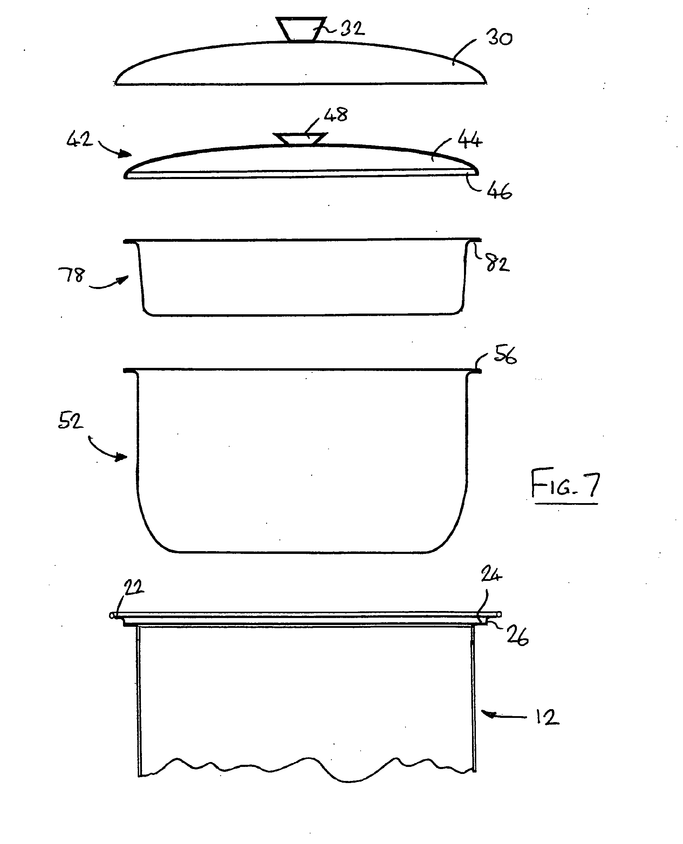

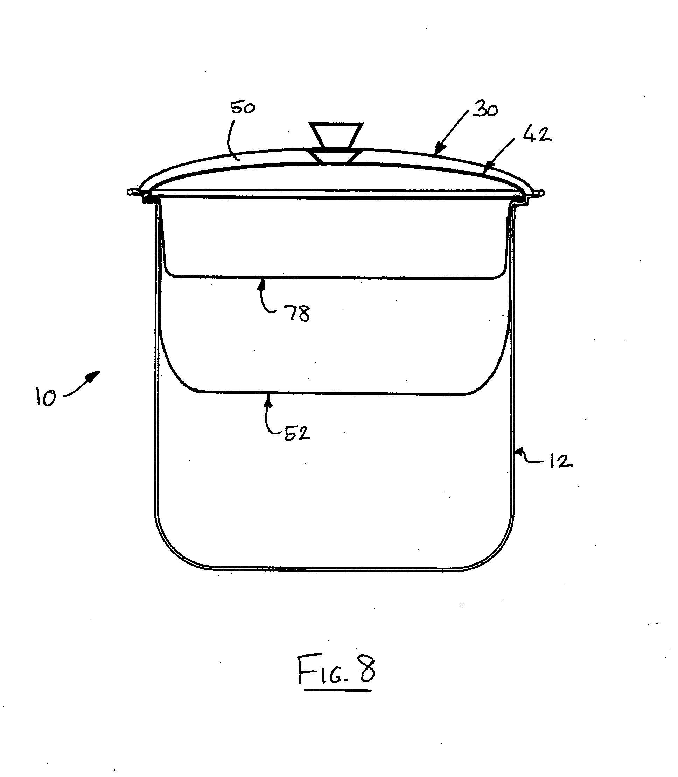

As also shown schematically in Figures 7 and 8, a domed outer lid 30 has a circular outer edge that lies on the outer upper shoulder 22 and fits within and is centred by the bead 28. The outer lid 30 is surmounted by a plastics central knob 32 whereby the outer lid 30 can be lifted off the pot 12. The knob 32 suitably has a thermometer (not shown) set into its upper face whereby a user can determine the approximate temperature within the multi-cooker 10, without lifting the outer lid 30 and hence, counter-productively, losing heat through the open top of the pot 12.

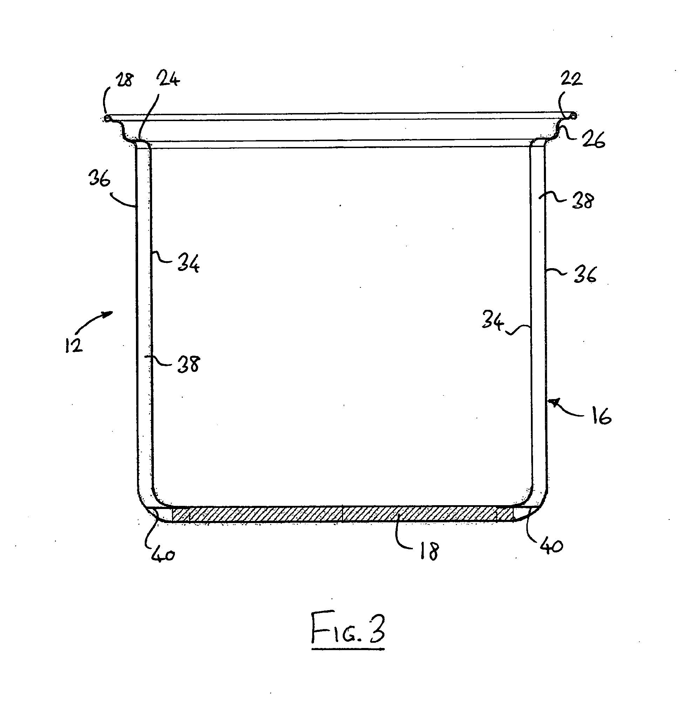

Figure 3 shows the pot 12 in enlarged vertical cross section and so shows the stepped features of the rim 20 in more detail. Figure 3 also shows that the base 18 of the pot 12 is a circular disc of solid metal, preferably aluminium, for retention, transmission and distribution of heat. In contrast, the side wall 16 is of insulating dual-wall construction. Specifically, the side wall 16 comprises an inner wall 34 and an outer wall 36 that is parallel to and spaced from the inner wall 34 to define an air gap 38. The inner and outer walls 34, 36 are suitably of spin-formed stainless steel and their thicknesses combine to form the rim 20.

Where they join the base 18, the inner and outer walls 34, 36 curve inwardly through 90° while retaining their mutual spacing. That spacing corresponds to the thickness of the base 18. Thus, the inner wall 34 aligns with an upper edge of the base 18 and the outer wall 36 aligns with a lower edge of the base 18. The inner and outer walls 34, 36 are attached to the respective edges of the base 18 by welding, for which purpose the upper and lower edges of the base 18 are brought to melting point to bond with the inner and outer walls 34, 36.

An annular partition 40 extends outwardly from the upper edge of the base 18, in the same plane as the upper side of the base 18. The partition 40 bridges the air gap 38 between the inner and outer walls 34, 36 adjacent the base 18 to separate the base 18 from the majority of the air gap 38. This prevents molten aluminium droplets falling into the air gap 38 during manufacture while the base 18 is being welded to the inner and outer walls 34, 36.

An inner lid 42 is shown schematically in Figures 7 and 8 of the drawings in conjunction with the outer lid 30. The inner lid 42 comprises a transparent glass body 44 of shallow convex section surrounded by a circular metal ring 46. The ring 46 is supported by the inner lower shoulder 24 and fits within and is centred by the annular upright 26. The body 44 is surmounted by a shallow central plastics knob 48 whereby the inner lid 42 can be lifted out of the pot 12. The shallow curvature of the body 44 and the shallowness of the knob 48 ensure that the inner lid 42 can fit under the outer lid 30 when both of the lids 30, 42 are in place.

The outer and inner lids 30 and 42, and air trapped in the gap 50 between them as shown in Figure 8, insulate the top of the pot 12 to improve heat retention. The successive seals where the lids 30, 42 seat against the rim 20 of the pot 12 help to retain heat and also moisture. Also, the transparent body 44 of the inner lid 42 enables foodstuffs cooking within the pot 12 to be viewed through the inner lid 42 when the outer lid 30 is lifted, but without lifting the inner lid 42 which would otherwise release heat and moisture from within the pot 12.

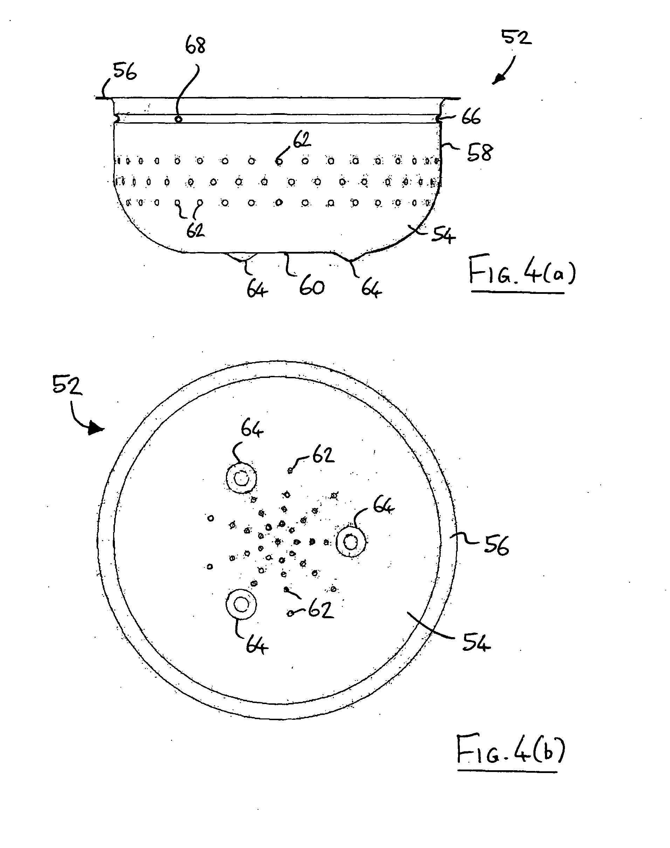

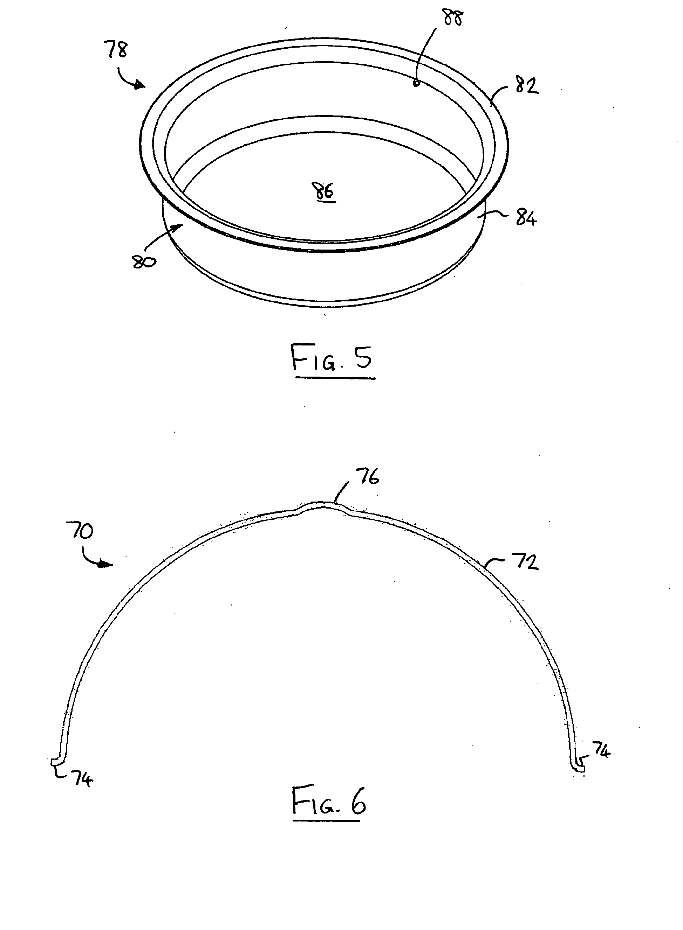

In addition to supporting the inner lid 42, the inner lower shoulder 24 and the annular upright 26 of the pot 12 also define a support for inserts that may be positioned in the pot 12 in various combinations for cooking various foodstuffs. In this way, the multi-cooker can be configured for tiered cooking on multiple cooking levels, whereby an entire meal can be cooked in one operation on a single source of heat. Two such inserts will now be described with reference to Figures 4(a), 4(b) and 5 of the drawings.

Figures 4(a) and 4(b) show a steamer 52, which is preferably of spin-formed stainless steel. The steamer 52 has a deep bowl 54 of circular horizontal section, depending from a flat annular flange 56. The bowl 54 has an annular side wall 58 that extends downwardly and then curves smoothly inwards into a floor 60. The floor 60 is generally flat and lies in a plane parallel to that of the flange 56.

The floor 60 is penetrated by an array of holes 62. Optionally, as shown, the side wall 58 may also be penetrated by an array of holes 62.

Three feet 64 protrude downwardly from the floor 60 in an equilateral triangular arrangement. The feet 64 enable the steamer 52 to be stood on a flat surface with the floor 60 clear of that surface, hence minimising heat transfer from the steamer 52 and promoting drainage through the holes 62 where necessary.

As Figures 7 and 8 show, the flange 56 is arranged to sit on the inner lower shoulder 24 of the pot 12 within the annular upright 26, whereby the steamer 52 hangs within the pot 12 with the bottom of the bowl 54 clear of the base 18. In this way, a foodstuff such as meat can cook in water or sauce at the bottom of the pot 12 and another foodstuff such as vegetables can be cooked in the steamer by steam rising from that water or sauce. It is of course possible for the multi-cooker 10 to be used simply with a pool of water in the bottom of the pot 12, without food in that water, to enable cooking in the steamer 52 and in any other inserts that may be used in conjunction with the pot 12.

A groove 66 pressed into the exterior of the side wall 58 extends around the bowl 54 just beneath, and in a plane parallel to, the flange 56. Diametrically-opposed holes 68 in the groove 66 (one of which is visible in Figure 4(a)) locate a wire handle 70 shown in Figure 6 and define a horizontal pivot axis for pivotal attachment of the handle 70 to the steamer 52. Thus, the handle 70 can lie within the bowl 54 in a stowed position when not in use and can be swung up into a plane orthogonal to the flange 56 for use in lifting the steamer 52 out of the pot 12.

As Figure 6 shows, the handle 70 comprises an approximately semi-circular arc 72 having a radius of curvature slightly smaller than that of the side wall 58. The arc 72 terminates in opposed ends 74 that are bent orthogonally from the arc 72 and align with each other. On assembly, the arc 72 is bent elastically inwards so that the ends 74 can fit in the holes 68, whereupon elastic recovery biases the ends 74 into the holes 68. The ends 74 protrude outwardly through the holes 68 into the groove 66 but are short enough that they do not extend beyond the depth of the groove 66. This ensures that when the steamer 52 is lowered into the pot 12, the ends 74 cannot scratch the inner surface of the pot 12.

The groove 66 defines a corresponding ridge around the inner surface of the bowl 54. A central bulge 76 in the arc 72 of the handle 70 rests conveniently on top of the ridge when the handle 70 is in its stowed position, preventing the arc 72 from dropping deeper into the bowl 54 where it would be difficult to grasp and could interfere with foodstuffs being cooked in the steamer 52. The bulge 76 also provides a convenient hanging point should the user wish to hang up the steamer 52 by its handle 70.

Figure 5 shows another insert, in this case a baking pan 78 suitable for cooking desserts, cakes and other foodstuffs requiring relatively dry heat. To this end, the baking pan 78 does not have holes for allowing the passage of steam.

The baking pan 78 is preferably of pressed steel or aluminium and may have a non-stick coating such as PTFE. The baking pan 78 has a shallow dish 80 of circular horizontal section, depending from a flat annular flange 82. The dish 80 has a frusto-conical downwardly-tapering annular side wall 84 whose lowest part is radiused inwardly into a generally flat floor 86. The floor 86 lies in a plane parallel to that of the flange 82.

As Figures 7 and 8 show, the flange 82 is arranged to sit directly or indirectly on the inner lower shoulder 24 of the pot 12 within the annular upright 26, whereby the baking pan 78 hangs within the pot 12. The flange 82 will sit directly on the inner lower shoulder 24 when the baking pan 78 is used without the steamer 52 in the pot 12 beneath. Where the steamer 52 is used in the pot 12, the baking pan 78 and the steamer 52 are in nested relation. Then, the flange 56 of the steamer 52 lies between the flange 82 of the baking pan 78 and the inner lower shoulder 24. In that case, the flange 82 is supported by the inner lower shoulder 24 but is not in direct contact with it. The bowl 54 of the steamer 52 is sufficiently deep that it can accommodate the depth of the dish 80 of the baking pan 78, while leaving space under the dish 80 for foodstuffs being cooked in the steamer 52.

Diametrically-opposed holes 88 (one of which is visible in Figure 5) near the top of the side wall 84 of the baking pan 78 locate a wire handle 70. The handle 70 is as shown in Figure 6, but is a little smaller than the corresponding handle 70 used to lift the steamer 52. Similarly, the holes 88 define a horizontal pivot axis for pivotal attachment of the handle 70 to the baking pan 78. Thus, as with the steamer 52, the handle 70 can lie substantially within the dish 80 in a stowed position when not in use and can be swung up into a plane orthogonal to the flange 82 for use in lifting the baking pan 78 out of the pot 12.

The features of the handle 70 and its manner of attachment to the baking pan 78 correspond to the above description of the handle 70 in relation to the steamer 52 and so need not be repeated here. An exception is that the baking pan 78 does not have an equivalent of the groove 66 of the steamer 52 or, therefore, the corresponding inwardly-facing ridge. Instead, the central bulge 76 in the arc 72 of the handle 70 rests conveniently on top of the flange 82 when the handle 70 is in its stowed position in the dish 80 of the baking pan 78.

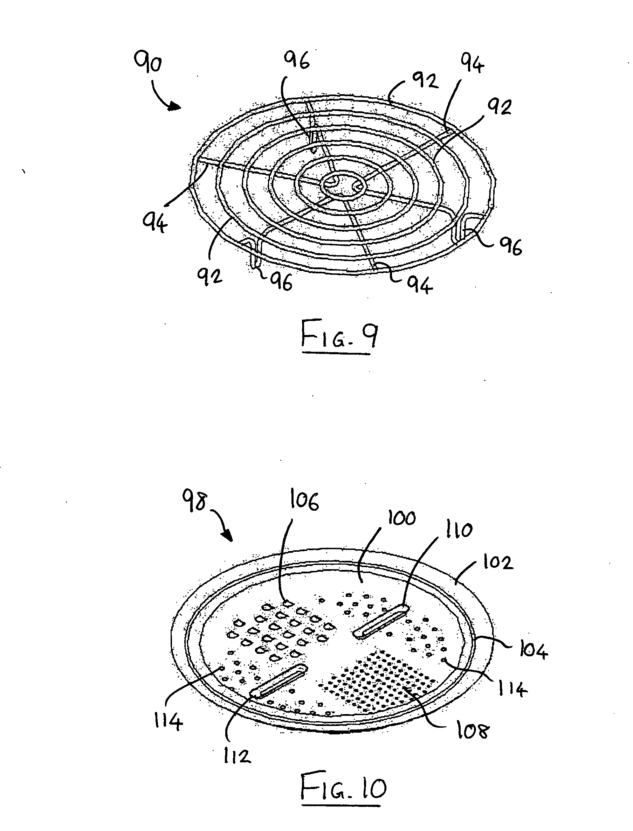

Figure 9 illustrates a trivet 90 that fits into the dish 80 of the baking pan 78. The trivet 90 comprises concentric wire circles 92 disposed in a plane, supported by three equiangularly-spaced triangular wire supports 94, each of which has a leg 96 extending orthogonally from the plane of the circles 92.

Figure 10 illustrates another insert, in this case a grater/slicer 98 that can also sit directly or indirectly on the inner lower shoulder 24 of the pot 12 within the annular upright 26. The grater/slicer 98 has a depressed centre plate 100 within a flat annular peripheral flange 102 that is raised above, and lies in a plane parallel to, the general plane of the plate 100. The flange 102 is stiffened by an annular ridge 104 and is arranged to sit on the inner lower shoulder 24 of the pot 12, on the flange 82 of the baking pan 78, or on the flange 56 of the steamer 52.

The grater/slicer 98 has grater formations 106 and 108 for coarse and fine grating respectively, and slicer formations 110 and 112, one of which can produce relatively thick slices and the other of which can produce relatively thin slices. When the grater/slicer 98 is used in combination with the pot 12, steamer 52 or baking pan 78, slices and gratings fall through the grater/slicer 98 into the pot 12, steamer 52 or baking pan 78 below. It will be noted that the grater/slicer 98 does not necessarily have to used with the pot 12 for this purpose, and that it can indeed be used in isolation or with any suitable bowl if desired. However, the grater/slicer 98 can be used in the pot 12 as a support for foodstuffs during cooking, and is perforated by holes 114 to promote the through flow of steam in that mode of use.

When the flanges 56, 82, 102 of the steamer 52, baking pan 78 and grater/slicer 98 respectively sit directly or indirectly on the inner lower shoulder 24 of the pot 12, the various abutting surfaces lie closely against each other. In doing so, they seal the chambers defined by the steamer 52, the baking pan 78 and/or the grater/slicer 98 within the pot 12. The sealing effect is improved by the weight of the inner lid 42 bearing down on one or more of the flanges 56, 82,102 and pressing the or each of those flanges 56, 82,102 against any flanges below or against the inner lower shoulder 24 of the pot 12.

Thus, for example, steam is forced preferentially through the holes 62 of the steamer 52 rather than, inefficiently, escaping more easily around the side of the steamer 52. Similarly, steam is discouraged from entering the baking pan 78 so as to maintain desirably dry conditions within. In this respect, it will be noted that steam escaping from the pot 12 around the side of the baking pan 78 will do so outboard of the metal ring 46 around the inner lid 42, which ring 46 lies closely against the flange 82 of the baking pan 78. Such steam will tend to bypass the dish 80 of the baking pan 78 rather than passing under the ring 46 to enter the dish 80. It may also be advantageous to segregate the various chambers within the pot 12 defined by the steamer 52, the baking pan 78 and/or the grater/slicer 98 to avoid transfer of flavours or smells from one foodstuff to another.

The shape of the steamer 52 is designed to maximise heat transfer into the baking pan 78 so that the baking pan 78 will bake foodstuffs more efficiently. Specifically, by virtue of the inward curvature beneath its side wall 58, the steamer 52 tapers downwardly toward the floor 60. It has been found that if a steamer has a vertical side wall positioned close to and parallel with the inner side wall of the pot 12, not enough heat transfers from the base of the pot 12 to the baking pan 78 because that heat is blocked by food contained in the steamer. In the embodiment shown, effective three-tiered cooking is achieved by the relatively narrow bottom of the steamer 52 that allows heat carried by hot air and steam rising within the pot 12 to travel around the side wall 58 of the steamer 52 and to be transferred to the baking pan 78 at a rate sufficient to facilitate baking or other cooking therein, also taking account of heat transferred to the baking pan 78 via the interior of the steamer 52.

The dual-wall construction of the side wall 16 of the pot 12 and the arrangement of outer and inner lids 30, 42 have considerable thermal benefits. Unlike normal single-wall cookware, the stove does not need to be left on for the duration of the cooking time. For example, as mentioned in the introduction, if the cooking time in single-walled cookware is one hour for a particular meal, a user will have to tend to the stove for one hour. By contrast, in the cookware of the invention, the user would only need to tend to the stove for, say, ten minutes while bringing the foodstuff(s) up to the desired temperature, which temperature is indicated on the thermometer set into the knob 32 on the outer lid 30. Then, the user can switch off the stove and leave the foodstuff(s) to self-cook within the pot 12.

Advantageously, therefore, the user can spend less time in the kitchen: he or she can relax, go shopping, play sport, pick up children from school etc. and does not have to be in the kitchen while the foodstuff(s) are cooking. Also, of course, there are substantial savings in energy and hence running cost over conventional cookware. Further, as the invention contemplates applying direct heat for a fraction of the normal time of traditional cooking methods, more minerals and nutrients are retained in the foodstuff(s). This makes for healthier cooking.

## Claims

1. A cooking utensil (10) comprising:
an open-topped container (12), the container (12) having a rim (20) that extends around the container (12);
at least one lid (30, 42) that is co-operable with the rim (20) to close the open top of the container (12); and
at least one food-supporting insert (52, 78, 98) that may be positioned within and supported by the container (12), the insert (52, 78, 98) having a depressed central portion (54, 80, 100) depending from a peripheral flange (56, 82, 102);
**characterised in that** the rim (20) comprises:
an inner shoulder portion (24) against which the peripheral flange (56, 82,102) of the insert (52, 78, 98) can seat to support the insert (52, 78, 98) positioned within the container (12); and
an outer shoulder portion (22) against which the lid (30, 42) can seat to close the open top of the container (12).

2. The utensil (10) of Claim 1, wherein the peripheral flange (56, 82, 102) is continuous around the periphery of the insert (52, 78, 98).

3. The utensil (10) of Claim 1 or Claim 2, wherein the peripheral flange (56, 82, 102) of the insert (52, 78, 98) is planar.

4. The utensil (10) of any preceding claim, comprising:
an inner lid (42) arranged to seat against the inner shoulder portion (24) or against a peripheral flange (56, 82,102) of an insert (52, 78, 98) that is seated against the inner shoulder portion (24); and
an outer lid (30) arranged to seat against the outer shoulder portion (22) while surrounding and covering the inner lid (42).

5. The utensil (10) of Claim 4, wherein the inner lid (42) has a transparent body (44) enabling viewing of food cooking in the container (12) or in the insert (52, 78, 98).

6. The utensil (10) of Claim 4 or Claim 5, wherein the inner lid (42) and the insert (52, 78, 98) are dimensioned such that the inner lid (42) can seat on the peripheral flange (56, 82, 102) of the insert (52, 78, 98) inboard of an outer edge of the peripheral flange (56, 82, 102).

7. The utensil (10) of any of Claims 4 to 6, wherein the outer shoulder portion (22) of the rim (20) is surrounded by an upstanding bead (28) within which the outer lid (30) fits.

8. The utensil (10) of any preceding claim, wherein the rim (20) is stepped such that the outer and inner shoulder portions (22, 24) are on different levels with respect to the open top of the container (12).

9. The utensil (10) of Claim 8, wherein the outer shoulder portion (22) is closer than the inner shoulder portion (24) to the open top of the container (12).

10. The utensil (10) of Claim 8 or Claim 9, wherein the outer and inner shoulder portions (22, 24) are joined by an upright portion (26) of the rim (20).

11. The utensil (10) of Claim 10 when Claim 8 is appendant to any of Claims 4 to 7, wherein the upright portion (26) defines a ring within which the inner lid (42) or the peripheral flange (56, 82, 102) of an insert (52, 78, 98) fits.

12. The utensil (10) of any preceding claim and comprising at least two food-supporting inserts (52, 78) each having a depressed central portion (54, 80) depending from a peripheral flange (56, 82), wherein the peripheral flanges (56, 82,) of the inserts (52, 78) correspond such that the peripheral flange (56, 82) of each insert (52, 78) is capable of seating interchangeably against the inner shoulder portion (24) of the rim (20).

13. The utensil (10) of Claim 12, wherein the peripheral flanges (56, 82) of the inserts (52, 78) are of substantially the same diameter.

14. The utensil (10) of Claim 12 or Claim 13, wherein the peripheral flange (82) of a second insert (78) is capable of seating against the peripheral flange (56) of a first insert (52) already seated against the inner shoulder portion (24) of the rim (20).

15. A cooking utensil (10) comprising:
an open-topped container (12), the container (12) having a rim (20) that extends around the container (12); and
at least two food-supporting inserts (52, 78) that may be positioned within and supported by the container (12), each insert (52, 78) having a depressed central portion (54, 80) depending from a peripheral flange (56, 82);
wherein the rim (20) comprises a shoulder portion (24) against which the peripheral flange (56, 82) of either insert (52, 78) can seat to support that insert (52, 78) positioned within the container (12);
**characterised in that** the peripheral flange (82) of a second insert (78) is capable of seating against the peripheral flange (56) of a first insert (52) already seated against the shoulder portion (24) of the rim (20).

16. The utensil (10) of Claim 14 or Claim 15, wherein the depressed central portion (54) of the first insert (52) is deeper than the depressed central portion (80) of the second insert (78).

17. The utensil (10) of any of Claims 14 to 16, wherein the inserts (52, 78) are nested when used together, with the second insert (78) being received in the first insert (52).

18. The utensil (10) of any of Claims 14 to 17, wherein the first insert (52) is a steamer defined by a wall (58, 60) that includes openings (62) to admit steam to food supported therein.

19. The utensil (10) of any of Claims 14 to 18, wherein the first insert (52) is a steamer defined by a wall (58, 60) that narrows downwardly.

20. The utensil of Claim 19, wherein the steamer (52) comprises a side wall (58) that is joined to a floor (60) by an inwardly curved portion.

21. The utensil (10) of any of Claims 14 to 20, wherein the second insert (78, 98) is a baking pan defined by a substantially continuous wall (84, 86) that blocks access of steam to food supported therein.

22. The utensil (10) of any preceding claim, wherein the container (12) has an insulating side wall (16).

23. The utensil (10) of Claim 22, wherein the side wall (16) comprises inner and outer walls (34, 36) with an insulating gap (38) between.

24. The utensil (10) of any preceding claim, wherein the container (12) has a heat-conducting base (18) for use on an external heat source.

25. The utensil (10) of any preceding claim and having an integral heat source.
